Europäisches Patentamt

European Patent Office

Office européen des brevets

(19)

(11) Publication number: **0 161 774**
**A1**

# EUROPEAN PATENT APPLICATION

(12)

(21) Application number: **85302280.4**

(22) Date of filing: **02.04.85**

(51) Int. Cl.⁴: **C 08 F 8/50**

(30) Priority: **09.04.84 FR 8405549**

(43) Date of publication of application: **21.11.85**
**Bulletin 85/47**

(84) Designated Contracting States: **AT BE CH DE FR GB IT LI NL SE**

(71) Applicant: **BP Chemicals Limited, Belgrave House 76 Buckingham Palace Road, London, SW1W 0SU (GB)**

(72) Inventor: **Cordonnier, Michel, BP Chimie BP No 2, F-13117 Lavera (FR)**
Inventor: **Kuhlburger, Jean Jacques, BP Chimie BP No. 2, F-13117 Lavera (FR)**

(74) Representative: **Delgrange, Jean Paul Maurice Emile et al, BP INTERNATIONAL LIMITED Patents Division Chertsey Road, Sunbury-on-Thames Middlesex TW16 7LN (GB)**

(54) **Modification of LLDPE by peroxide treatment.**

(57) The present invention relates to a process for the thermo-mechanical treatment of copolymers of ethylene and higher alpha-olefins of the 'linear low density polyethylene' type (LLDPE), of a density comprised between 0.900 and 0.935, this treatment being performed in the molten stage, by means of a free-radical-forming organic peroxide, this process being characterised in that the copolymers to be treated are chosen from amongst certain LLDPE's having a melt index ($MI_{2.16}$) greater than 3 g/10 minutes, and in that these copolymers are introduced direct in the form of a powder into a thermo-mechanical treatment apparatus for polymers of the extrusion type, simultaneously with at least one or more organic peroxides in a quantity of over 0.05% and less than 1% by weight in relation to the polymers, this organic peroxide being used in the liquid form or in the form of a solution in hydrocarbon solvents.

The copolymers thus treated are particularly well suited for extrusion or blow-moulding into hollow bodies, tubes, sheathing and insulation for electric cables and wires.

MODIFICATION OF LLDPE BY PEROXIDE TREATMENT

The invention relates to a process for the treatment of copolymers of ethylene and higher alpha-olefins of "linear low density polyethylene" type (LLDPE), this process being intended to impart to these copolymers special suitability for conversion into hollow bodies, tubes, sheathing and insulators for electric cables and wires, by means of machines and under conditions currently used for extrusion conversions of high density polyethylene (HDPE).

The production of these LLDPE's by copolymerising mixtures of ethylene and one or more higher alpha-olefins as comonomer is well known. The copolymers obtained in this way contain from 4 to 25% by weight of higher alpha-olefins and possess a density comprised between 0.900 and 0.935. They have a molecular structure characterised by relatively short branchings which are statically distributed along the molecular chain, and whose nature depends on the comonomer or comonomers employed. These LLDPE's may have a branching index generally above 0.95, the branching index of a polyethylene or a copolymer of ethylene and one or more alpha-olefins being measured by the ratio between its intrinsic viscosity determined in solution in trichlorobenzene and the calculated intrinsic viscosity of a polyethylene of perfectly linear structure and identical molecular weight by mass, measured by gel permeation chromatography.

By comparison with low density polyethylenes obtained by free-radical polymerisation of ethylene under high pressure, known as "high-pressure polyethylenes" (LDPE), the molecular structure of which has long branchings and a branching index of the order of 0.6 to 0.7, the LLDPE's converted into finished objects possess numerous advantages:

- superior rigidity at equal density
- superior mechanical resistance when hot
- considerably improved resistance to cracking under stress and in particular in the presence of a surfactant
- better impact resistance
- better bursting resistance when they are converted into tubes
- higher softening temperature.

However, it is known that the conversion of LLDPE's into finished objects generally presents some difficulties during conversion, by reason in particular of excessive fluidity and low strength of these copolymers in the molten state, and also by reason of their low viscosity in elongation. The result is that these LLDPE's are not well suited to obtaining finished objects of uniform quality by the techniques of conversion currently employed for the conversion of polyethylenes of the HDPE type.

It is also known that the LLDPE's generally present a relatively narrow distribution of molecular weights, characterised by a polydispersion index (P) and a flow parameter (n) having low values, which results in reduced possibilities of conversion for these copolymers.

Processes for the treatment of copolymers of the LLDPE type making it possible to render them suitable for conversion into film, especially under the conversion conditions currently employed for HDPE, and for improving the transparency of the films obtained without altering their mechanical properties have already been proposed. These processes consist in treating LLDPE's thermo-mechanically in the molten state in the presence of an organic peroxide. These LLDPE's are generally converted in the form of pellets having a melt index ($MI_{2.16}$) which is comparatively low, especially below 3g/10 minutes, in the presence of organic peroxide used in a small quantity, especially below 0.1% by weight, in relation to the LLDPE.

Now it is especially interesting to be able to treat LLDPE with a melt index ($MI_{2.16}$) of over 3g/10 minutes thermo-mechanically by means of peroxide, in order to obtain copolymers suitable for extrusion conversion into hollow bodies, tubes, sheathing and insulators for electric cables and wires, these copolymers having in particular a relatively high melt index and a broad molecular weight distribution. However, the thermo-mechanical treatment of an LLDPE with a melt index ($MI_{2.16}$) of over 3g/10 minutes runs into practical difficulties of execution. In fact, the treatment of these LLDPE's by moderate quantities of peroxide does not being about an adequate broadening of molecular weight distribution and may lead to treated LLDPE's whose mechanical properties are unsatisfactory, and which after extrusion conversion give finished objects with a non-uniform wall and a rough surface, known as "shark skin". On the other hand, the use of larger quantities of peroxide generally has the result of causing the appearance of gels or infusible copolymer in the treated LLDPE.

A process for treating copolymers of ethylene and higher alpha-olefins of the LLDPE type has now been found which makes it possible to solve these difficulties and adapt these copolymers to conversion other than conversion into film, especially to conversion by extrusion into hollow bodies, tubes, sheathing and insulators for electric cables and wires. This adaptation is obtained in particular by substantially broadening the molecular weight distribution of an LLDPE which initially has a melt index ($MI_{2.16}$) of over 3g/10 minutes, this adaptation, however, being achieved without causing the substantial formation of gels.

The invention therefore relates to a process for the thermo-mechanical treatment of copolymers of ethylene and higher alpha-olefins in the molten state, by means of a free-radical-forming organic peroxide, these copolymers being of the "linear low density polyethylene" type (LLDPE) and having a density from 0.900 to 0.935, this process characterised in that the copolymers to be treated are chosen from amongst LLDPE having a melt index ($MI_{2.16}$) of over 3g/10 minutes, preferably comprised between 3.1 and 10g/10 minutes, a flow parameter ($n_1$) comprised between 20 and 40, a polydispersion index ($P_1$) comprised between 2.7 and 4.7, and a branching index of over 0.95, and in that these copolymers are introduced direct in the form of a powder into a thermo-mechanical polymer treatment apparatus of the extruder type, simultaneously with at least one organic peroxide in a quantity of over 0.05% and less than 1% by weight in relation to the copolymers, preferably comprised between 0.1 and and 0.5% by weight in relation to the copolymers, this organic peroxide being used in the liquid form or in the form of solution in hydrocarbon solvent, the thermo-mechanical treatment also being carried out at increasing temperatures from a temperature below the decomposition temperature of the peroxide up to a temperature above the decomposition temperature of the peroxide comprised in the range from 130 to 250°C.

The LLDPE's employed in the process according to the invention may be obtained copolymerising ethylene with one or more higher alpha-olefins, comprising from 3 to 8 carbon atoms, preferably propylene, 1-butene, 4-methyl-1-pentene, 1-hexene, 1-octene, in the presence of a catalyst system of the Ziegler Natta type comprising on the one hand a catalyst containing a compound of a transition metal of Groups IV, V and VI of the Periodic Table of Elements, such as titanium or vanadium, and on the other hand a co-catalyst consisting of an organometallic compound of a metal of Groups I to III of this Table, or alternatively in the presence of a catalyst comprising a chromium oxide compound, associated with a granular support based on a refractory oxide and activated by thermal treatment at a temperature comprised between 200 and 1200°C under a non-reducing atmosphere, preferably an oxidising atmosphere.

In particular, the LLDPE's may be obtained by copolymerisation carried out in the gas phase under a pressure below 4MPa and at a temperature comprised between 50°C and 100°C. Especially interesting results are obtained in particular when the LLDPE's are prepared according to one of the gas fluidised bed processes for copolymerisation of ethylene and at least one higher alpha-olefin, these processes being described in French Patent Nos 2,405961, 2,529211 and 2,532649. The copolymers obtained in this way comprise from 4 to 25% by weight of units derived from a higher alpha-olefin and have a density comprised between 0.900 and 0.935 and more especially comprised between 0.910 and 0.930. These gas-phase copolymerisation processes are of particular interest within the framework of the present invention, since they give the LLDPE direct in the form of a powder. Moreover, the LLDPE's obtained from such processes are characterised by a very specific structure which is particularly well suited to the thermo-mechanical treatment employed in the process of the present invention. These copolymers comprise a relatively large amorphous phase along with a crystalline phase. In particular they have a single melting point comprised between 115 and 125°C corresponding to a single type of crystallite, this melting point being measured by scanning differential calorimetric analysis, after heating at 200°C, maintenance at this temperature for 20 minutes, cooling at a rate of 16°C per minute down to 50°C and heating at a rate of 16°C per minute.

It has been found that in order to obtain an LLDPE suitable for extrusion conversion into hollow bodies, tubes, sheathing and insulators for electric cables and wires, the LLDPE employed in the treatment according to the process of the invention must have a sufficiently high melt index ($MI_{2.16}$), especially above 3g/10 minutes, so that the LLDPE obtained after this treatment has properties suitable for this conversion, and preferably a melt index ($MI_{2.16}$) comprised between 0.3 and 1.2, most preferably comprised between 0.4 and 1.

The LLDPE employed in the thermomechanical treatment must also have a relatively narrow molecular weight distribution, characterised both by a low flow parameter ($n_1$) comprised between 20 and 40, and by a low polydispersion index ($P_1$), comprised in particular between 2.7 and 4.7. The use of an LLDPE with a broad molecular weight distribution having in particular a polydispersion

index ($P_l$) of over 4.7 would lead after treatment by the process of the invention to a copolymer whose mechanical properties, and especially impact strength, would be inadequate.

Moreover, the LLDPE which initially has a branching index of over 0.95, after thermo-mechanical treatment according to the invention undergoes modification such that the branching index decreases slightly and has a value comprised between 0.8 and 0.95.

According to the invention, the LLDPE's are introduced direct in the form of a powder into a polymer thermo-mechanical treatment apparatus of the extruder type. This powder consists of particles having a mean diameter by mass, Dm comprised between 300 and 2000 microns, preferably comprised between 400 and 1500 microns, and preferably a relatively narrow particle size distribution, especially such that the ratio of the mean diameter by mass, Dm, to the mean diameter by number, Dn of these particles is less than or equal to 3.5, preferably comprised between 1.1 and 3.3. Furthermore, this powder suitably has a bulk density comprised between 0.25 and 0.50g/cm$^3$, preferably comprised between 0.30 and 0.45g/cm$^3$.

According to the invention a free-radical-forming organic peroxide is used for preference whose decomposition is negligible below 120°C, and whose half-life duration is high and is preferably over 1 minute at 160°C. The organic peroxide can be chosen, for example, from amongst ditertiarybutyl peroxide, dicumyl peroxide, 2,5-dimethyl 2,5 di(tertbutylperoxy)hexane, 2,5-dimethyl 2,5-di(tertbutylperoxy)hexyne, butyl 4,4-bis(tertbutylperoxyvalerate), cumyl hydroperoxide, 1,1-bis (tertbutylperoxy) 3,3,5-trimethylcyclohexane and 1,3-di (tertbutylperoxy) di-isopropylbenzene.

Preferably this peroxide is used in liquid form or in the form of a solution in relatively volatile hydrocarbon solvent such as n-hexane, at a concentration generally comprised between 10 and 80% by weight in relation to the solution.

The organic peroxide is employed in the process of the invention in a quantity of over 0.05% and below 1% by weight in relation to the copolymers, preferably in a quantity comprised between 0.1 and 0.5% by weight, and more especially comprised between 0.15 and 0.4% by weight in relation to the copolymers. However, this peroxide quantity should not be too high, in order to avoid a cross-linking of the copolymer which is harmful to the quality of the finished object, the absence of such cross-linking being characterised by a zero value of the gel content in the treated copolymer. It has been found that the use of a quantity of peroxide of over a 0.05% and below 1% by weight in relation to the LLDPE does not lead to the substantial formation of gel. This comparatively high quantity of peroxide, however, is necessary to obtain the desired broadening of molecular weight distribution of the LLDPE. This broadening is demonstrated by a high value for the flow parameter $(n_2)$ of the treated LLDPE, this value being such that the ratio of $(n_2):(n_1)$ is generally comprised between 2.3 and 6, preferably comprised between 2.3 and 4. It appears from measurements made on the copolymer treated in accordance with the present invention that the increase in the flow parameter, however, is not accompanied by as high an increase in the polydispersion index as would normally have been expected. In point of fact, the LLDPE treated according to the invention has an observed polydispersion index $(P_2)$ such that the ratio $(P_2):(P_1)$ is comprised between 1.1 and 1.3. Consequently it is found that the LLDPE obtained according to the process of the invention has a special molecular structure, capable of improving both the working of these copolymers during their conversion by extrusion and the mechanical properties of these copolymers, such as impact resistanceor resistence to stress cracking.

According to the invention, the LLDPE is introduced direct into a polymer thermomechanical treatment apparatus of the extruder type, simultaneously with the organic peroxide. It is essential that the organic peroxide should be placed in contact with the LLDPE at a temperature below the decomposition temperature of the peroxide, so as to obtain a homogeneous mixture rapidly, this mixture then being subjected to the defined thermomechanical treatment, in particular

0161774

at a temperature above the decomposition temperature of the peroxide. In point of fact, an inadequate homogenisation of the mixture would lead, after the thermomechanical treatment, to partially cross-linked products having a appreciable gel content.

The production of a mixture of LLDPE and organic peroxide at ambient temperature (20°C) prior to the thermomechanical treatment, by means of a powder mixer of the conventional type, such as a rotary mixer, eg a Henschel mixer, has already been proposed. However, such a process does not permit of using relatively large quantities of peroxide in an LLDPE powder, especially quantities of over 0.05% by weight of peroxide in relation to the LLDPE, without traces of gel appearing in the finished articles.

Surprisingly, it has been found that relatively large quantities of the peroxide may be used in an LLDPE having in particular a melt index ($MI_{2.16}$) of over 3g/10 minutes, without promoting the formation of gels, as a result of the introduction of LLDPE powder and organic peroxide in the liquid form or in the form of a solution in hydrocarbon solvent direct into an extrusion machine of the current type.

The best results are obtained when the LLDPE is subjected in the molten state to thermomechanical treatment in a single stage by means of organic peroxide. This peroxide is introduced direct into the extrusion machine used to pelletize the LLDPE powder, the feed zone of this machine being maintained at a temperature below the decomposition temperature of the organic peroxide. In this way, a homogeneous distribution of the peroxide in the LLDPE is obtained in a relatively short time, before its passage into the treatment zone where the temperature is above the decomposition temperature of the peroxide. This treatment in a single stage, without the prior mixing of the LLDPE and the peroxide at ambient temperature, not only has the advantage of simplifying the operations to be performed, but also of promoting the obtaining of LLDPE having a broad molecular weight distribution, suitable for conversion by extrusion into finished articles, free from gel or unmelted polymers.

The copolymers of LLDPE type treated according to the invention, having a flow parameter ($n_2$) comprised between 45 and 160, preferably comprised between 50 and 140 and a polydispersion index ($P_2$) comprised between about 3 and 6 are in fact particularly suited to the production of hollow bodies, tubes, sheathing and insulation for electric cables and wires. The finished objects have excellent mechanical properties, particularly as regards impact strength and stress cracking, and have walls of a uniform thickness and a smooth surface. These objects are obtained by the current extrusion or blow moulding techniques by means of machines and under conditions of working utilised for the conversion of HDPE in general, and of high pressure polyethylene (LDPE) in particular for sheathing and insulation for electric cables and wires.

Measurement of the Gel Content of a Copolymer by Extraction with Boiling Xylene

The content of gel or content of insolubles in boiling xylene is measured by means of an extractor of the Kumagawa type; a sample of copolymer of approximately 1g and 0.4 litre of xylene as solvent are used. The extraction conditions are as follows:

- atmospheric pressure : $10^5 \pm 1500$ pa,
- temperature: 130°C
- duration of extraction: 6 hours.

The residue of the sample, if any, is rinsed in acetone, then dried under nitrogen and placed in an oven. The gel content is the ratio as a percentage by weight of the residue of the sample to that of the initial sample.

Measurement of the Polydispersion Index (P) of a Copolymer by Gel Permeation Chromatography

The polydispersion index (P) of a copolymer is calculated according to the ratio of the mean molecular weight by mass, Mw, to the mean molecular weight by number, Mn, of the copolymer, from a distribution curve of the molecular weights obtained by means of a gel permeation chromatograph of the "DuPont" make, type "860" (High Temperature Size Exclusion Chromatograph), equipped with a pump of "DuPont" type "870" make, the operating conditions being as follows:

- solvent: trichloro-1,2,4-benzene

- solvent throughput: 0.8 ml/minute

- three columns of "DuPont" make with a "Zorbax" packing, of particle size 6 microns and porosity 60 A, 1000 A, and 4000 A respectively are used,

- temperature: 150°C

- sample concentration: 0.15% by weight

- injection volume: 300 ml

- infrared detection at a wavelength of 3,425 microns by means of a cell 1 millimetre thick,

- standardisation by means of a HDPE sold by BP Chimie S.A. under the tradename "Natene 6055" [R]: $M_w$ = 70,000 and P = 3.8

## Measurement of the Melt Indices ($MI_{2.16}$) and ($MI_{21.6}$) and of the Flow Parameter (n) of a Copolymer

Melt index ($MI_{2.16}$) is measured under a load of 2.16 kg at 190°C by the ASTM D-1238 method, Condition E.

The melt index ($MI_{21.6}$) is measured under a load of 21.6 kg at 190°C by the ASTM-1238 method, Condition F.

The flow parameter (n) is calculated according to the equation:

$$n = (MI_{21.6}):(MI_{2.16})$$

## Method for Determining the Mean Diameters by Mass (Dm) and Number (Dn) of Particles

According to the invention the mean diameters by means (Dm) and by number (Dn) of the copolymer particles are measured from microscope observations by means of the Optomax image analyser (Micromeasurements Ltd, Great Britain). The principle of measurement consists in obtaining from the experimental study of a particle population by light-optical microscopy, a table of absolute frequencies giving the number (ni) of particles belonging to each class (i) of diameters, each class (i) being characterised by an intermediate diameter (di) comprised between the limits of the said class. According to the authorised French standard NF X 11-630 of June 1981 Dm and Dn are provided by the following formulae:

- mean diameter by mass: $Dm = \dfrac{\Sigma ni(di)^3\ di}{\Sigma ni\ (di)^3}$

- mean diameter by number: $Dn = \dfrac{\Sigma ni.di}{\Sigma ni}$

11

0161774

The ratio Dm:Dn characterises the particle size distribution; it is sometimes called the "width of particle size distribution". The measurement by the Optomax image analyser is performed by means of an inverted microscope which permits of the examination of suspensions of copolymer particles at an enlargement comprised between 16 and 200 x. A television camera picks up the images provided by the inverted microscope and transmits them to a computer which analyses the images received line by line and dot by dot on each line, in order to determine the dimensions or diameters of the particles and then to classify them.

The following non-restrictive examples illustrate the invention.

Example 1

The LLDPE employed is a copolymer powder (A) obtained by gas fluidised bed copolymerisation of ethylene and 1-butene, this copolymer powder having the following characteristics:

- Content of units derived from 1-butene; 7.5% by weight
- Density according to standard NFT 51063: 0.920
- Melt index ($MI_{2.16}$): 5.1g/10 minutes
- Branching index: 1
- Melting point measured by differential calorimetric analysis: 122°C
- Mean diameter by mass, Dm, of the particles of 700 microns
- Dm/Dn ratio of the particles equal to 3
- Density of the powder equal to 0.30 g/cm$^3$
- Content of stabilisation additive:
  . calcium stearate: 0.1% by weight
  . phenolic compounds sold by Ciba-Geigy, under the tradename "Irganox 1076" (R): 0.02% by weight
  . organophosphorus compound sold by Ciba-Geigy under the tradename "Irgafos 168" (R): 0.08% by weight.

The organic peroxide employed is a liquid compound sold by Akzo under the tradename "B 50 Elq" (R). This is a ditertiarybutyl peroxide dissolved in an organic solvent at the rate of 50 parts by weight of peroxide to 50 parts by weight of solvent. The

12

0161774

ditertbutyl peroxide has a boiling point equal to 111°C. At 200°C the decomposition time of the peroxide is 36 seconds, much less than the passage time in the extruder which is approximately a minute and a half.

The treatment is performed in a single stage by means of a Werner-Pfleiderer extruder, with twin screw of diameter 53 millimetres, into which extruder the copolymer powder (A) and the liquid peroxide are introduced direct without prior mixing of these two ingredients.

The liquid peroxide "B 50 Elq" [R] is introduced in particular by means of a metering pump into the hopper of the extruder. The decomposition of the peroxide then takes place during a single passage in the extruder at 200°C.

The pellets obtained are then used to produce 1-litre bottles weighing approximately 35g by means of a Fischer F HB 054 blow-moulding machine.

Table 1 gives the principal characteristics of copolymer (A) treated under these conditions with metered portions of liquid peroxide comprised between 0.05 and 0.25% by weight, and also the appearance of the 1-litre bottle obtained from these treated copolymers. Table 1 also shows the throughputs of treated copolymers obtained on a "Gottfert" extrusion machine at screw speeds comprised between 30 and 90 revolutions per minute.

It is found that increasing in the content of peroxide used in the treatment of the copolymer (A) has the effect of decreasing the branching index and the melt index of the copolymer and of increasing very distinctly the flow parameter (n) and less appreciably the polydispersion index. In particular it is observed that a quantity of peroxide of 0.05% by weight is regarded as too low for this treatment, since the one-litre bottles obtained from the copolymer treated in this way have walls of uniform thickness but a rough surface known as "shark-skin".

Moreover, it is found that the use of an LLDPE in the form of a powder and of a liquid peroxide in a treatment performed in a single stage, without prior mixing of these two ingredients, makes it possible to use comparatively large quantities of peroxide, so that the content of peroxide in the copolymer may be over 0.1% by weight, without traces of gel or unmelted copolymers making their appearance in the walls of the finished object.

The copolymers treated in this way, having a melt index $(MI_{2.16})$ equal to 0.6 or to 0.4, are particularly well suited to the production of tubes, sheathing and insulation for electric cables and wires effectively free from gel.

It is also found that the throughputs of the copolymers treated with a melt index $(MI_{2.16})$ equal to 2.2 and 0.95 on a "Gottfert" extrusion machine are more or less identical whatever the speed of the screw, between 30 and 90 revolutions per minute.

Example 2

One operates as in Example 1, except for the fact that instead of treating the copolymer powder (A), a copolymer powder (B) is treated which is obtained by gas-phase copolymerisation of ethylene and 1-butene by means of a fluidised bed, this copolymer powder having the following characteristics:

- Content of units derived from 1-butene: 7.0% by weight
- Density according to standard NFT 51063: 0.920
- Branching index: 1
- Melt Index $(MI_{2.16})$: 3.4g/10 minutes
- Melting point measured by differential calorimetric analysis: 123°C
- Mean diameter by mass, Dm, of the particles of 750 microns
- Dm/Dn ratio of the particles equal to 3.1
- Density of the powder equal to $0.31g/cm^3$
- Content of stabilisation additive:
    . calcium stearate: 0.10% by weight
    . phenolic compound sold by Ciba-Geigy under the trade name "Irganox 1076"[(R)]: 0.02% by weight
    . organophosphorus compound sold by Ciba-Geigy under the trade name "Irgafos 168"[(R)]: 0.08% by weight.

The organic peroxide (identical to that used in Example 1) is used in a quantity of 0.15 weight % based on the copolymer (B).

Table 2 indicates the main characteristic features of copolymer (B) before and after treatment, especially the stress crack resistance measured by the standard ASTM-D-1693-70 method, and also the throughputs of the treated copolymer (B), measured on a Fischer F HB 054 blow moulding machine as a function of the speed of the screw rotating at between 40 and 80 revolutions per minute.

By way of comparison, Table 2 also gives the corresponding characteristics of a low-density polyethylene obtained under high pressure (LDPE), having a melt index ($MI_{21.6}$) and a density more or less identical to those of the copolymer (B) treated.

First of all it is noted that the copolymer (B) treated has a stress crack resistance which is considerably superior to that of the HDPE. It is also found that the throughputs of the copolymer (B) treated measured on the blow moulding machine are always greater than the throughputs of LDPE under identical conditions of conversion.

Example 3

One operates as in Example 1, except for the fact that instead of treating copolymer powder (A), copolymer powder (C) obtained by gas phase copolymerisation of ethylene and 1-butene by means of a fluidised bed is treated, this copolymer powder having the following characteristics:

- Content of units derived from 1-butene: 7.5% by weight
- Density according to standard NFT 51063: 0.920
- Melt index ($MI_{2.16}$): 5.5g/10 minutes
- Melting point measured by differential calorimetric analysis: 122°C
- Mean diameter by mass, Dm, of the particles of 700 microns
- Dm:Dn ratio of the particles equal to 3.1
- Density of the powder equal to 0.30g/cm$^3$
- Content of stabilisation additive:
  . calcium stearate: 0.10% by weight
  . phenolic compound sold by Ciba-Geigy under the tradename "Irganox 1076"(R): 0.02% by weight

. organophosphorus compound sold by Ciba-Geigy under the tradename "Irgafos 168"(R): 0.08% by weight.

The organic peroxide, identical to that used in Example 1, is used in a quantity equal to 0.20% by weight in relation to the copolymer (C).

Table 2 gives the principal characteristics of copolymer (C) before and after treatment, in particular the stress crack resistance measured by the standard ASTM-D-1693-70 method, and also the throughputs of the copolymer (C) treated, measured on a FISCHER F HB 054 blow-moulding machine as a function of the speed of the screw rotating at between 40 and 80 revolutions per minute.

It is found from the results set out in Table 2 that copolymer (C) treated with a quantity of peroxide equal to 0.20% by weight in relation to the copolymer has no gel. Its conversion on a blow-moulding machine is excellent and its stress crack resistance is good.

Example 4 (comparative)

The LLDPE employed is the copolymer powder (A) used in Example 1. The organic peroxide used, of "VAROX"(R) make is 2-5 dimethyl 2-5 di(tertbutylperoxy) hexane, deposited on an inert mineral support at the rate of 50 parts by weight of peroxide to 50 parts by weight of support.

First of all the copolymer powder (A) and the solid peroxide referred to above are mixed in a rotary mixer, of HENSCHEL make, at ambient temperature (20°C).

The mixture obtained in this way is introduced into a WERNER PFLEIDERER twin-screw extruder with diameter 28mm, rotating at 200 revolutions per minute, with a torque fixed at 60%. Homogenisation is performed by passing this mixture in the molten state into the extruder for a period of 1 minute at 150°C.

This mixture is then subjected to a treatment consisting in a second passage of the mixture in the same extruder for a period of 1 minute at 200°C. During this treatment the peroxide undergoes practically complete decomposition. Pellets are obtained ready for conversion into finished objects. These pellets are then used to produce 1-litre bottles weighing approximately 35g, by means of a FISCHER F HB 054 blow-moulding machine.

Table 3 gives the principal characteristics of the copolymer (A) before and after treatment under these conditions with quantites of peroxide from 0.1 to 0.2% by weight, and also the appearance of the 1-litre bottles obtained from these treated and untreated copolymers.

In particular it is observed that the 1-litre bottles produced by blow-moulding from copolymer (A) treated with 0.1% by weight peroxide have walls of a uniform thickness and a rough surface. Moreover, the bottles produced from copolymer (A) treated with 0.15 and 0.20% by weight of peroxide respectively have surface blemishes caused by polymer particles which did not melt during conversion; these blemishes increase very appreciably when one goes from the copolymer (A) treated with 0.15% by weight of peroxide to that treated with 0.20% by weight.

TABLE 1

| Nature of the copolymer | Content of peroxide (% by wt) | Branching Index | $MI_{2.16}$ (g/10 minutes) | n (#) | $n_2/n_1$ | P (#) | $P_2/P_1$ | Gel content | Throughput(*) in g/minutes as a funciton of the speed of the screw in RPM | | | Appearance of the walls of 1 litre bottles (thickness/surface) |
|---|---|---|---|---|---|---|---|---|---|---|---|---|
| | | | | | | | | | 30 | 60 | 90 | |
| Copolymer (A) | 0 | 1 | 5.1 | 22 | – | 3.5 | – | 0 | – | – | – | Non-uniform/very rough |
| Copolymer (A) treated with peroxide | 0.05 | 0.91 | 2.8 | 40 | 1.82 | 3.7 | 1.06 | 0 | – | – | – | Uniform/rough |
| | 0.10 | 0.88 | 2.2 | 54 | 2.45 | 4.0 | 1.14 | 0 | 9.5 | 19.3 | 29.3 | Uniform/smooth |
| | 0.15 | 0.85 | 0.95 | 74 | 3.36 | 4.2 | 1.20 | 0 | 9.7 | 19.3 | 29.5 | Uniform/smooth |
| | 0.21 | 0.83 | 0.6 | 98 | 4.45 | 4.3 | 1.23 | 0 | – | – | – | Uniform/smooth |
| | 0.25 | 0.81 | 0.4 | 126 | 5.73 | 4.5 | 1.29 | 0 | – | – | – | Uniform/smooth |

(*) "GOTTFERT" make blow-moulding machine.

(#) Before treatment with peroxide, the flow parameter (n) and polydispersity (P) of the copolymer are $n_1$ and $P_1$ respectively; after treatment, they are $n_2$ and $P_2$ respectively.

TABLE 2

| Nature of the copolymer | Content of peroxide (% by wt) | Density | Branching Index | $MI_{2 \cdot 16}$ (g/10 minutes) | n (#) | $n_2/n_1$ | P (#) | $P_2/P_1$ | Gel content | Stress cracking resistance (hours) | Throughput in kg/hour as a function of the screw speed (RPM) | | |
|---|---|---|---|---|---|---|---|---|---|---|---|---|---|
| | | | | | | | | | | | 40 | 60 | 80 |
| Copolymer (B) | 0 | 0.920 | 1 | 3.4 | 25 | – | 3.9 | – | 0 | – | – | – | – |
| " " | 0.15 | 0.920 | 0.86 | 0.71 | 75 | 3.00 | 4.4 | 1.13 | 0 | greater than 1200 | 22.5 | 34.4 | 45.9 |
| LDPE | 0 | 0.920 | 0.65 | 0.7 | 72 | – | 7.6 | – | 0 | 2 | 20.4 | 30.6 | 45.9 |
| Copolymer (C) | 0 | 0.920 | 1 | 5.5 | 22 | – | 3.7 | – | 0 | – | – | – | – |
| " " | 0.20 | 0.920 | 0.830 | 0.63 | 96 | 4.36 | 4.5 | 1.15 | 0 | greater than 1200 | 22.4 | 33.9 | 45.0 |

\# See footnote to Table 1.

**TABLE 3**

| Nature of the copolymer | Content of peroxide (% by wt) | Density | Branching Index | $MI_{2\cdot16}$ (g/10 minutes) | n (#) | $n_2/n_1$ | P (#) | $P_2/P_1$ | Gel content | Appearance of the walls of 1 litre bottles (thickness/surface) |
|---|---|---|---|---|---|---|---|---|---|---|
| Copolymer (A) | 0 | 0.920 | 1 | 5.1 | 22 | – | 3.5 | – | 0 | Non-uniform/very rough |
| Copolymer (A) treated with peroxide | 0.10 | 0.920 | 0.86 | 2.65 | 60 | 2.73 | 3.9 | 1.1 | 0 | Uniform/rough |
| | 0.10 | 0.920 | 0.88 | 2.2 | 54 | 2.45 | 4.0 | 1.14 | 0 | Uniform/smooth |
| | 0.15 | 0.920 | 0.84 | 1.07 | 71 | 3.23 | 4.0 | 1.14 | 0 | Uniform/smooth plus unmelted polymers |
| | 0.20 | 0.920 | 0.83 | 0.77 | 85 | 3.86 | 4.1 | 1.17 | 0 | Uniform/smooth plus unmelted polymers |

\# See footnote to Table 1.

Claims

1. Thermo-mechanical treatment process for copolymers of ethylene and higher alpha-olefin in the molten state, by means of a free-radical-forming organic peroxide, these copolymers being of the "linear low density polyethylene" type (LLDPE) and having a density from 0.900 to 0.935, this process being characterised in that the copolymers to be treated are chosen from amongst LLDPE's having a melt index ($MI_{2.16}$) of over 3g/10 minutes, preferably comprised between 3.1 and 10g/10 minutes, a flow parameter ($n_1$) comprised between 20 and 40, a polydispersion index ($P_1$) comprised between 2.7 and 4.7 and a branching index of over 0.95, and in that these copolymers are introduced direct in the form of a powder into a polymer thermo-mechanical treatment apparatus of the extruder type, simultaneously with at least one organic peroxide in a quantity of over 0.05% and less than 1% by weight in relation to the copolymers, preferably comprised between 0.1 and 0.5% by weight in relation to the copolymers, this organic peroxide being used in the liquid form or in the form of a solution in hydrocarbon solvent, the thermo-mechanical treatment also being performed at increasing temperatures from a temperature below the decomposition temperature of the peroxide up to a temperature above the decomposition temperature of the peroxide, comprised in the range from 130 to 250°C.

2. Process according to Claim 1, characterised in that the copolymers employed are obtained by copolymerising ethylene with one or more higher alpha-olefins, comprising from 3 to 8 carbon atoms, the alpha-olefins preferably being selected from propylene, 1-butene, 4-methyl-1-pentene, 1-hexene, 1-octene, in the presence of a catalyst system of the Ziegler-Natta type comprising on the one hand a catalyst containing a compound of a transition metal of Groups IV, V or V of the Periodic Table of Elements, and on the other hand a co-catalyst consisting of an organometallic compound of a metal of Groups I to III of this Table, or alternatively in the presence of a catalyst comprising a chromium oxide compound associated with a granular support based on a refractory oxide and activated by thermal treatment at a temperature comprised between 200 and 1200°C under a non-reducing atmosphere, preferably an oxidising atmosphere.

3. A process according to Claim 1, characterised in that the copolymers employed are obtained by gas fluidised bed copolymerisation of a mixture of ethylene and at least one higher alpha-olefin, under a pressure below 4 MPa and at a temperature comprised between 50°C and 100°C, these copolymers comprising from 4 to 25% by weight of units derived from higher alpha-olefin and having a single melting point comprised between 115°C and 125°C, measured by scanning differential calorimetric analysis.

4. Process according to Claim 1, characterised in that the copolymers are used in the form of a powder consisting of particles having a mean diameter by mass, Dm, comprised between 300 and 2000 microns, a particle size distribution such that the ratio of the mean diameter by mass, Dm, to the mean diameter by number Dn, is less than or equal to 3.5 and having a density comprised between 0.25 and 0.50g/cm$^3$.

5. Process according to Claim 1, characterised in that the organic peroxide is used in the liquid form in the form of solutions in hydrocarbon solvents, at concentrations comprised between 10 and 80% by weight in relation to the solutions.

6. As new industrial products, the copolymers treated according to the process described in one of the foregoing claims.

7. Application of the copolymers claimed in 6 to the production of hollow bodies, tubes, sheathing and insulators for electric

22

0161774

cables and wires, by conventional thermoforming techniques.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 069 603 (BP CHIMIE) * Claims 1-3,5,6; page 1 * | 1-7 | C 08 F 8/50 |
| X | EP-A-0 079 687 (ASAHI KASEI KOGYO KABUSHIKI KAISHA) * Claims 1-8 * | 1-7 | |

--- 

-----

TECHNICAL FIELDS SEARCHED (Int. Cl.4)

C 08 F

The present search report has been drawn up for all claims

| Place of search | Date of completion of the search | Examiner |
|---|---|---|
| THE HAGUE | 17-07-1985 | PERMENTIER W.A. |

EPO Form 1503. 03.82